# EUROPEAN PATENT APPLICATION

(11) **EP 0 847 971 A2**
(43) Date of publication of application: **17.06.1998**
(21) Application number: 97850172.4
(22) Date of filing: 10.12.1997
(51) Int. Cl.: C05F 17/02

(54) **Device for composting**

(30) Priority: 12.12.1996 SE 9604567
(71) Applicant: Ritzel, Tibor, 417 05 Göteborg (SE)
(72) Inventor: Ritzel, Tibor, 417 05 Göteborg (SE)
(74) Representative: Roth, Ernst Adolf Michael

(57) **Abstract**

Device for closed or partly closed composting, where the decomposition can proceed at the proper temperature, under aerobic conditions and under proper mixing of the material, which is cheep, and which is easy to use. The device comprises a container (11) intended to roll, and said container is provided with gables (13,13') and a mantle face (14) which is air permeable and has an inner hard-wearing layer (17), an outer protective layer (18) and can have an intermediate isolating layer (19). The gables (13, 13') consist of a stiff and thick material and can be isolated. The mantle face (14) is preferably provided with an opening (20) for entering the material for composting and also for emptying of the ready composted material. Mixing of the material can be done e.g. by rolling the container 11 from one entering place to the next where the cover (21) can be opened. To facilitate the usage of the container (11) this can be provided with two or more rolling rockers (23,23'). In one design the container (11) is comprised with two ore more compartments (15) separated with walls.

## Description

### Technical area

The present invention relates to a device for closed or partly closed composting of household garbage or garden waist and more specifically to a closed or partly closed device with cylindrical shape or mainly cylindrical shape.

### Background of the invention

Devices for closed or partly closed composting are well-known in the art in a number of models. Such devices give final shape for use in gardens and likewise as well as in industrial devices. Fundamental factors for the design of all the different types of compost containers are partly the conditions which are needed inside the container for the decomposition of the composting material to proceed in a proper way and partly that the devices should be rational to use. Important factors for composting are partly that the decomposition can proceed at the proper temperature, preferably at more than 50°C, partly that the decomposition can proceed under aerobic conditions and partly that the decomposition can proceed under proper mixing of the material in a so called agitated process. Composting at a too low temperature will give rise to that the process will proceed too slowly, and on the other hand a too high temperature will give rise to that the necessary micro-organisms will have an unfavourable environment. Inadequate access to oxygen gives rise to that the material in the compost container putrefies and gives rise to unpleasantly smelling rot gas, among others hydrogen sulphide, H₂S, and therefore the material can not be used in a proper way. Inadequate mixing of the composted material also gives rise to unpleasant smell, and the decomposition process does not proceed in the intended way.

Conventionally the devices for composting consist of some kind of isolated containers with cover. Such a device is described in Swedish patent application SE 9102567-5, where the walls of the container consist of an isolated material and the container bottom is furnished with holes to ensure the supply of oxygen to the decomposition process. Another device is described in Swedish patent application SE 8903989-5. Mixing of the composted material will take place by removing the front wall, whereupon the material will be mixed manually, and whereupon the sidewall again will be placed in position. An other compost container in accordance with same principle is described in the Swedish magazine Råd&Rön 10/96 page 22, where the composting container instead is circular. One disadvantage with the described compost containers is that the filled container has to be resting during a couple of weeks for final composting, and during this period new material should not be entered, and moreover the mixing work is a heavy and inconvenient work. Another disadvantage is that the ready composted material has to shovelled out from the container after final composting which in the same way is a heavy and inconvenient work. To handle the problem with mixing of the composted material other solutions have been suggested. In the Swedish magazine Råd&Rön 10/96 page 23 a cylinder shaped container is described. The container is placed in a stand with a device to rotate said container. The container is divided in two compartments to permit final composting in one of the compartments, while entering can still go on in the other compartment. Emptying of the compartment can be done, for instance by placing a wheel-barrow under the stand, whereupon one of the compartments can be emptied directly into the wheel-barrow, whereupon the ready composted material can be driven to intended place to use for e.g. as. soil improvement. A disadvantage with this solution is partly that the device is expensive and partly that it will be large and clumsy and therefore preferably should be installed stationary, which for instance causes that a wheel-barrow is needed for emptying said container.

### Description of the invention

The purpose of the present invention is to provide a device for closed or partly closed composting, where the decomposition can proceed at the proper temperature, under aerobic conditions and under proper mixing of the material. An additional purpose of the present invention is to provide a device for said composting, which is cheep, and which is easy to use.

This purpose has according to the invention been solved by a composting container comprising a mainly cylindrical shaped container intended to roll, said container comprising gables and an air permeable mantle face and the mantle face having an inner hard-wearing layer and an outer protective layer. Said mantle face is preferably provided with an intermediate isolating layer between the hard-wearing and the outer protective layer. The containers gables can also preferably be isolated. The container can have a diameter between 30 cm and 200 cm. When said container should be rolled by hand, the diameter should be between 40 cm and 100 cm and preferably between 50 cm and 80 cm.

The outside of the mantle face consists of a material, which protects against mechanical influence from the weather and wind. The gables consist of a stiff and thick material. The mantle face on the container is suitably provided with an opening with a lockable cover for entering the material for composting and also for emptying of the ready composted material. Mixing of the material can be done by rolling in different ways by rolling the container from one entering place to the next. Emptying of the ready composted material can be done by rolling the container to the chosen place, where the cover is opened, and the material could be emptied from the container. To facilitate the usage of the container can this be provided with two ore more rolling rockers. In one design the container comprises two ore more compartments separated with walls. This design can be achieved, by bringing two ore more containers together and there upon can be rolled together. In this design the composting container can be used for final composting in one of the compartments, while entering still can go on in the other compartment. The container is in this case preferably provided with openings with lockable cover in each compartment.

### Description of the figures

The invention shall in the following be described with the help of an example and with reference to the following figures of which:

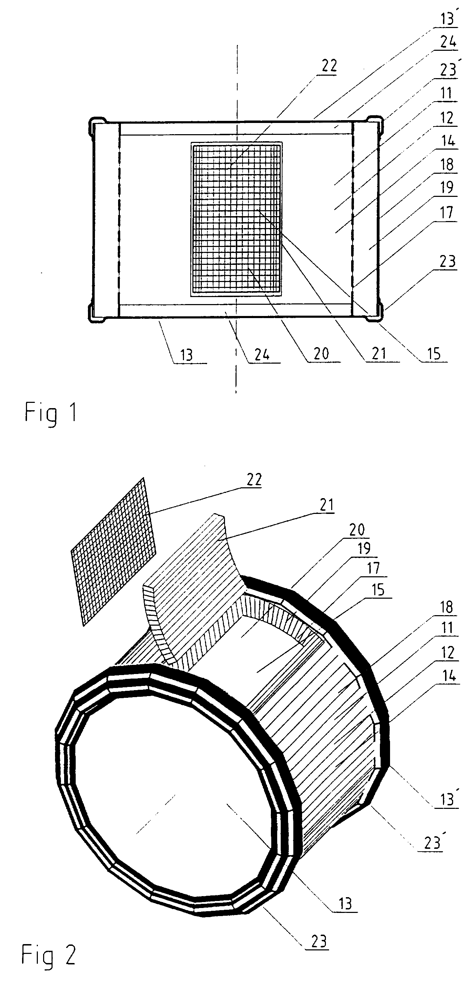

Fig. 1 represents a planview of a compost container in according to the invention provided with one compartment.

Fig. 2 represents a perspective sketch of a compost container in accordance with the invention provided with one compartment.

### Description of an example

The compost container 11 according to the example comprises a cylindrical shaped container 12 with a diameter of between 40 and 70 cm built up as a sandwich construction with an isolated mantle face 14 in three layers and comprising isolated gables 13, 13'. The compost container 11 comprises a compartment 15. The mantle face 14 is air permeable and have an inner layer 17, which can be made from for instance glass fiber fabric or geotextile.

The outside of the mantle face 18 consists of a material, which protects against mechanical influence from weather and wind and can be made from for instance a sheet of aluminium or plastic. The mantle face 14 further comprises an intermediate isolating layer 19, which can be made from a permeable cell plastic material. The internal layer 17 is joined to the isolating layer 19.

The gables 13, 13' consist of a stiff and thick material and can be made from for instance a sheet of polycarbonate or aluminium isolated with for instance a layer of cell plastic 24, which is joined to the gables 13 respectively 13' on the inside of said gable. The mantle face 14 of the container 11 is preferably provided with an opening 20 for entering the material for composting and also for emptying of the ready composted material. The opening is provided with a cover 21, which is provided with some type of lock to keep the cover 21, in a closed position. The cover 21, can also be completely removed at emptying of the container 11. Mixing of the material can be done by rolling the container 11 by hand from one entering place to the next.

Emptying of the material can be done by rolling the container 11 in the same way to the chosen place, where the cover 21 is opened or removed, and the composted material could be emptied from the container 11. To sift the ready composted material at the emptying, the opening 20 can be provided with a sieve 22.

To facilitate the rolling of the container 11 this is provided with rolling rockers 23,23'. The rolling rockers 23,23' are joined to the gables 13,13'. The gables 13,13' are easy to dismantle from the mantle face 14. The rolling rockers 23,23' are constructed like clamp bands to hold the container 11 together.

The invention is of course not limited to the described example, but is also applicable for different designs according to the scoop of the invention.

## Claims

1. Device for closed or partly closed composting shaped as a container (11) comprising a mainly cylindrical shaped container (12) with a mantle face (14) and gables (13,13'), **characterized** in that said mantle face (14) is air permeable and that said mantle face has an inner hard-wearing layer (17), an outer protective layer (18) and an intermediate isolating layer (19) and that the mixing of composting material is done by that the container (11) is intended to be rolled.

2. Device for closed or partly closed composting according to claim 1, **characterized** in that the container (11) comprises rolling rockers (23,23').

3. Device for closed or partly closed composting according to claim 2, **characterized** in that the container (11) is intended to be rolled by hand.

4. Device for closed or partly closed composting according to one or several of the previous claims, **characterized** in that the gables (13,13') of the container (11) are isolated.

5. Device for closed or partly closed composting according to one or several of the previous claims, **characterized** in that said mantle face (14) of the container (11) comprises one or more openings (20) and covers (21) for these.

6. Device for closed or partly closed composting according to claim 5, **characterized** in that the opening or openings (20) comprises a sieve or sieves (22).

7. Device for closed or partly closed composting according to one or several of the previous claim, **characterized** in that the container (11) comprises two or more compartments (15) separated with walls.
